# EUROPÄISCHE PATENTSCHRIFT

(11) **EP 2 540 158 B1**
(45) Veröffentlichungstag und Bekanntmachung des Hinweises auf die Patenterteilung: **15.02.2017**
(21) Anmeldenummer: 12167326.3
(22) Anmeldetag: 09.05.2012
(51) Int. Cl.: A01K 9/00

(54) **Viehtränkeventilanordnung**
Nipple valve assembly
Agencement de soupape de tetine

(30) Priorität: 28.06.2011 DE 102011105853
(43) Veröffentlichungstag der Anmeldung: 02.01.2013
(73) Patentinhaber: Müller, Josef, 84428 Buchbach (DE)
(72) Erfinder: Müller, Josef, 84428 Buchbach (DE)
(74) Vertreter: Weickmann & Weickmann PartmbB

(56) Entgegenhaltungen:
- US-A- 2 516 730
- US-A- 2 652 027
- US-A- 2 695 007

## Beschreibung

### I. Anwendungsgebiet

Die Erfindung betrifft eine Viehtränkeventilanordnung zum Anschließen an einen Behälter, die einen Saugnuckel zum Ansaugen von in dem Behälter befindlicher Flüssigkeit durch das Vieh, einen Ventilkörper, der an dem Saugnuckel befestigbar ist und einen von der Flüssigkeit durchströmbaren Ventilkanal aufweist, sowie einen Steckhalter zum Festlegen der Kombination aus Ventilkörper und Saugnuckel an dem Behälter umfasst. Die Erfindung betrifft ferner einen Ventilkörper sowie einen Steckhalter zum Gebrauch in einer Viehtränkeventilanordnung.

### II. Technischer Hintergrund

Aus der EP 2 160 942 A ist eine Ventilvorrichtung für Säugetränkebehälter und Säugetränkeeimer mit einem Ventilkörper und einem Saugnuckel bekannt. Der Ventilkörper ist mit einem Gewinde versehen, das bei Befestigung des Ventilkörpers an einem Behälter auf der Innenseite des Behälters liegt. Die Verschraubung des Ventilkörpers mit dem Behälter erfolgt durch eine Mutter, wobei ein Flansch des Ventilkörpers die Abstützung des Ventilkörpers auf der Behälteraußenseite bewirkt. Dadurch, dass sich Gewinde und Mutter bei Benutzung auf der Innenseite des Behälters befinden, können Verunreinigungen oder Keime, die sich im schwer zu reinigenden Gewindebereich sammeln, zur Verunreinigung des Behälterinhaltes führen.

Der Saugnuckel wird am Ventilkörper durch einen Bajonettverschluss befestigt. Bei dieser Ausführung sind somit bei der Montage zwei Arbeitsschritte, nämlich das Befestigen des Ventilkörpers an dem Behälter durch Verschrauben des Ventilkörpergewindes mit der Mutter sowie das Befestigen des Saugnuckels am Ventilkörper mittels des Bajonettverschlusses, erforderlich. Insbesondere die Befestigung des Ventilkörpers am Behälter mittels Verschraubung führt zu einer unkomfortabel lösbaren Verbindung des Ventilkörpers mit dem Behälter. Aufgrund des bei der Demontage erforderlichen Aufwands wird häufig darauf verzichtet, den Ventilkörper vom Behälter abzunehmen und ihn zu reinigen, so dass sich insbesondere im Gewindebereich Verschmutzungen bilden.

Darüber hinaus weist die Ausführung der EP 2 160 942 A einen im Inneren des Behälters auf den Ventilkörper aufsteckbaren abgewinkelten Saugrüssel auf. Dieses Bauteil ist zusätzlich zu fertigen. Da er auf den Ventilkörper aufgesteckt wird, kann er sich durch Erschütterungen von diesem lösen. Da der Saugrüssel abgewinkelt ist, ist er nur schwer zu reinigen, wodurch sich auch im Saugrüssel schnell dauerhafte Verunreinigungen bilden.

Die US 2,652,027 offenbart einen mit einem Saugnuckel versehenen Fütterungseimer. In die Wandung des Fütterungseimers ist eine Hülse eingelötet, eingeschraubt oder gerollt. Durch diese wird vom Inneren des Eimers aus der Saugnuckel hindurchgesteckt. Dieser besetzt an seinem dem Inneren des Eimers zugewandten Ende eine ringförmige Wulst, deren Außendurchmesser größer ist als der Innendurchmesser der Hülse, so dass der Saugnuckel nicht durch die Hülse hindurchrutschen kann. Liegt die Wulst in der Hülse, so wird vom Behälterinneren aus ein Ventilkörper in den Saugnuckel gesteckt. Dieser weist an seinem Außenumgang ebenfalls eine ringförmige Wulst auf. Beim Hineinstecken des Ventilkörpers in den Saugnuckel wird durch die Wulst des Ventilkörpers der Saugnuckel mit seiner Wulst in der Hülse verklemmt.

Die US 2,695,007 offenbart eine Kalbfütterungseimer-Baugruppe, bei der am Eimer ebenfalls eine Hülse befestigt ist, durch die vom Inneren des Eimers ein Saugnuckel hindurchgesteckt wird, der an seinem dem Eimer zugewandten Ende eine ringförmige Wulst aufweist, deren Außendurchmesser größer ist als der Innendurchmesser der Hülse, so dass der Saugnuckel nicht durch die Hülse hindurchrutschen kann. In die Öffnung des Saugnuckels wird vom Inneren des Behälters ein Ventilkörper eingesteckt. Dieser weist ebenfalls an seinem Außenumfang eine Wurst auf. Durch eine Klammer, die im Inneren des Behälters aufgesteckt wird, werden die Wulst des Ventilkörpers , die Wulst des Saugnuckels und ein Flansch der Hülse, der der Wulst des Saugnuckels benachbart ist, gegeneinander vorgespannt, so dass eine Dichtwirkung erzielt wird sowie Ventilkörper und Saugnuckel an der Hülse befestigt sind. Nachteilig ist hier, dass die Klammer im Inneren des Behälters angeordnet ist, was zu unnötigen Verunreinigungen führt bzw. dieses Bauteil zusätzlich desinfiziert werden muss.

Die US 2,516,730 offenbart eine auf einen Eimer aufsetzbare Halterung, an der ein Saugnuckel befestigt ist, durch den über einen in den Eimer ragenden Schlauch aus diesem Flüssigkeit angesaugt werden kann.

### III. Darstellung der Erfindung

### a) Technische Aufgabe

Es ist daher die Aufgabe der vorliegenden Erfindung, eine Viehtränkeventilanordnung zu entwickeln, die an einem Behälter schnell mit wenigen Handgriffen montiert und zu Reinigungszwecken ebenso schnell wieder abgenommen werden kann. Die Viehtränkeventilanordnung ist dabei so zu gestalten, dass sie keine Gewindegänge, Hohlräume etc. aufweist, die schwer zu reinigen sind. Des Weiteren soll die Zahl der Einzelteile, aus denen die Viehtränkeventilanordnung besteht, soweit wie möglich reduziert werden, um eine kostengünstige Fertigung sowie eine einfache Montage am Behälter zu ermöglichen.

### b) Lösung der Aufgabe

Diese Aufgabe wird durch eine Viehtränkeventilanordnung mit den Merkmalen des Anspruchs 1, einen Steckhalter mit den Merkmalen des Anspruchs 4 und einen Ventilkörper mit den Merkmalen des Anspruchs 7 gelöst. Weitere Ausgestaltungen der vorliegenden Erfindung ergeben sich aus den Unteransprüchen.

Die erfindungsgemäße Viehtränkeventilanordnung umfasst einen Ventilkörper, einen Saugnuckel und einen Steckhalter. Der Saugnuckel kommt im Wesentlichen außerhalb eines Behälters zu liegen, an dem die Viehtränkeventilanordnung befestigt wird. Mittels des Saugnuckels wird Flüssigkeit, die sich in dem Behälter befindet, vom Vieh angesogen. Der Saugnuckel ist deshalb vorzugsweise elastisch, beispielsweise aus Gummi gefertigt, wobei er an der dem Ventilkörper abgewandten Seite eine Öffnung aufweist, die sich dann öffnet, wenn das Vieh am Saugnuckel zu saugen bzw. auf diesem zu kauen beginnt. Der Saugnuckel ist an einem Ventilkörper befestigbar. Der Ventilkörper weist einen Ventilkanal auf, der von der Flüssigkeit durchströmt werden kann. Zur Befestigung des Ventilkörpers an einem Behälter weist der Ventilkörper einen Haltevorsprung auf, mittels welchem eine Behälterwand des Behälters von der Innenseite des Behälters aus hintergriffen werden kann. Der Haltevorsprung kann als ringförmiger Flansch, der an dem Außenumfang des Ventilkörpers angeordnet ist, ausgebildet werden.

Der Ventilkörper weist weiterhin wenigstens einen Klemmvorsprung auf. Der Klemmvorsprung ist ein beliebiges punktförmiges, linienförmiges oder flächiges Element, an welches der Steckhalter Kraft übertragend angreifen kann. Der Klemmvorsprung kann beispielsweise von der Seitenfläche einer Nut im Außenumfang des Ventilkörpers ausgebildet sein, wobei sich der Klemmvorsprung außerhalb des Behälters befindet, wenn die Viehtränkeventilanordnung an einem Behälter montiert ist.

Die Viehtränkeventilanordnung weist des Weiteren einen Steckhalter auf. Dieser hat wenigstens eine Keilfläche, d. h. der Steckhalter weist Bereiche unterschiedlicher Dicke auf, wobei die Dicke des Steckhalters von einem Bereich minimaler Dicke zu einem Bereich maximaler Dicke vorzugsweise kontinuierlich zunimmt. Darüber hinaus kann der Steckhalter jedoch auch Bereiche aufweisen, in denen seine Dicke konstant ist.

Um die Viehtränkeventilanordnung an dem Behälter anzuschließen, kann der Ventilkörper derart angeordnet werden, dass sich der Haltevorsprung im Inneren des Behälters befindet und eine Fläche des Haltevorsprunges dabei an der Innenwandung des Behälters anliegt. Der Steckhalter ist zum Anschließen der Viehtränkeventilanordnung an den Behälter außerhalb des Behälters an den Ventilkörper ansteckbar. Der Steckhalter stützt sich dann mit einer Fläche an der Außenwand des Behälters ab. Gleichzeitig wirkt die wenigstens eine Keilfläche des Steckhalters mit dem wenigstens einen Klemmvorsprung des Ventilkörpers derart zusammen, dass der Haltevorsprung des Ventilköpers gegen eine Innenwand des Behälters vorgespannt wird. Der Haltevorsprung des Ventilkörpers dichtet dabei ohne zusätzliches Dichtelement mit der Innenwand des Behälters ab. Es kann jedoch auch ein zusätzliches Dichtelement zwischen Innenwand des Behälters und Haltevorsprung des Ventilkörpers angeordnet werden.

Eine im Sinne der Erfindung ausgebildete Viehtränkeventilanordnung zeichnet sich vor allem dadurch aus, dass sie schnell an einen Behälter montierbar und wieder demontierbar ist. Bei ihr wird die Zahl der Spalten, Ritzen, Hohlräume und Gewinde, die mit der Flüssigkeit in Berührung stehen, soweit wie möglich reduziert, so dass die Größe der Anlagerungsflächen für Keime bzw. Verunreinigungen minimiert ist und die Bestandteile der Viehtränkeventilanordnung einfach und gründlich gereinigt werden können. Die erfindungsgemäße Viehtränkeventilanordnung weist eine geringe Zahl an Einzelteilen auf, so dass sie einfach und kostengünstig herstellbar ist. Gleichzeitig können einzelne Teile, z. B. der Saugnuckel, bei Abnutzung bzw. Verschleiß ausgetauscht werden.

Eine vorteilhafte Ausgestaltung der Erfindung ist im Patentanspruch 2 angegeben. Bei dieser Ausführung umhüllt der Saugnuckel zumindest abschnittsweise den Ventilkörper. Der Saugnuckel kann bei dieser Ausführung mit Hilfe des Steckhalters, der bereits zur Befestigung des Ventilkörpers an dem Behälter dient, an dem Ventilkörper befestigt werden. Dazu umhüllt beispielsweise der Saugnuckel einen Abschnitt des Ventilkörpers, in dem der wenigstens eine Klemmvorsprung angeordnet ist. Beim Aufstecken des Steckhalters auf den Ventilkörper umgreift der Steckhalter dabei den Abschnitt des Saugnuckels, der den Ventilkörper umhüllt, und klemmt diesen Abschnitt des Saugnuckels zwischen sich und dem Ventilkörper ein. Bei dieser Ausführung ist somit kein zusätzliches Bauteil erforderlich, um den Saugnuckel am Ventilkörper zu befestigen. Vielmehr erfolgen sowohl die Befestigung des Ventilkörpers am Behälter als auch die Befestigung des Saugnuckels am Ventilkörper durch ein einziges Bauteil, nämlich den Steckhalter. Dadurch können die Herstellungskosten reduziert werden. Insbesondere ergibt sich jedoch eine schnelle und einfache Montage der Viehtränkeventilanordnung.

Nach einer weiteren vorteilhaften Ausführung weist der Saugnuckel einen Flansch auf. Bei dieser Ausführung wird der Saugnuckel so auf den Ventilkörper aufgeschoben und umhüllt diesen, dass der Flansch bei montiertem Zustand der Viehtränkeventilanordnung zwischen der Behälterinnenwand und dem Haltevorsprung des Ventilkörpers liegt. Der (ringförmige) Flansch dichtet damit den Bereich zwischen Behälterinnenwand und Haltevorsprung des Ventilkörpers ab, so dass keine Flüssigkeit durch das Loch des Behälters, in dem der Ventilkörper der Viehtränkeventilanordnung angeordnet ist, in die Umgebung entweichen kann. Der Flansch des Saugnuckels dient somit als Dichtungsring zwischen Behälterinnenwand und Haltevorsprung des Ventilkörpers. Auf eine zusätzliche Dichtung zwischen Behälterinnenwand und Haltevorsprung des Ventilkörpers in Form eines separaten Dichtungselements kann dadurch verzichtet werden.

Der Steckhalter zur Befestigung des Viehtränkeventils an einem Behälter weist wenigstens eine Keilfläche auf. Der Steckhalter wird, um die Viehtränkeventilanordnung an einem Behälter zu befestigen, außerhalb des Behälters an den Ventilkörper angesteckt. Dabei stützt sich der Steckhalter mit einer Fläche an einer Behälteraußenwand des Behälters ab. Der Steckhalter weist wenigstens eine Keilfläche auf, die mit dem wenigstens einen Klemmvorsprung des Ventilkörpers zusammenwirkt. Beim Aufstecken des Steckhalters auf den Ventilkörper entstehen dadurch Kräfte zwischen Steckhalter und Klemmvorsprung des Ventilkörpers einerseits und einer Fläche des Steckhalters und der Außenwand des Behälters andererseits derart, dass der Haltevorsprung des Ventilkörpers gegen eine Behälterinnenwand des Behälters vorgespannt wird. Durch die Keilwirkung des Steckhalters wird also eine Kraft auf den Ventilkörper derart ausgeübt, dass der Ventilkörper in einer Längsrichtung so mit einer Kraft beaufschlagt wird, dass der Haltevorsprung des Ventilkörpers, der im Inneren des Behälters angeordnet ist, gegen eine Behälterinnenwand des Behälters gepresst wird und dadurch mit der Behälterinnenwand dichtend zur Anlage kommt. Der Ventilkörper wird also durch die Keilwirkung zwischen Steckhalter, Klemmvorsprung und Behälteraußenwand in seiner Längsrichtung betrachtet in Richtung des Behälteräußeren mit einer Kraft beaufschlagt.

Nach einer vorteilhaften Weiterbildung der Erfindung ist vorgesehen, dass der Steckhalter zwei Schenkel aufweist, die voneinander einen Abstand haben, und jeder der Schenkel wenigstens eine Keilfläche hat. Die Schenkel bilden dabei einen Zwischenraum, der so groß ist, dass zwischen den Schenkeln des Steckhalters ein Abschnitt des Ventilkörpers angeordnet werden kann. Dabei kann der Abstand der Schenkel jedoch kleiner sein als der Außendurchmesser des Ventilkörpers. Dies ist insbesondere dann der Fall, wenn der Ventilkörper an seiner Außenfläche Nuten aufweist, in denen zumindest ein Abschnitt der Schenkel des Steckhalters zu liegen kommt, um gemeinsam mit den Seitenflächen der Nuten, die jeweils als Klemmvorsprung im Sinne der vorliegenden Erfindung fungieren, die gewünschte Vorspannung des Ventilkörpers gegen den Behälter zu erzeugen. Dabei wirkt zumindest eine Komponente der zwischen Steckhalter und Ventilkörper hervorgerufenen Kraft, vorzugsweise jedoch die Hauptkomponente oder gar die gesamte Kraft, in Richtung der Längsachse des Ventilkörpers. Durch die erfindungsgemäße Ausführung des Steckhalters kann durch einfache Gestaltung des Steckhalters und der Klemmvorsprünge des Ventilkörpers, mit denen die wenigstens eine Keilfläche des Steckhalters zusammenwirkt, eine Vorspannung des Ventilkörpers relativ zum Behälter erzeugt werden, so dass ein Haltevorsprung des Ventilkörpers gegen eine Behälterinnenwand des Behälters vorgespannt wird und mit dieser in dichtende Anlage kommt.

In einer weiteren vorteilhaften Ausgestaltung weist der Steckhalter eine Griffvorrichtung auf. Mittels dieser kann der Steckhalter einfach auf den Ventilkörper aufgesteckt bzw. von diesem abgezogen werden. Durch die Griffvorrichtung können durch den Verwender die Kräfte auf den Steckhalter, die erforderlich sind, um mittels der Keilwirkung zwischen Keilfläche des Steckhalters, Klemmvorsprung des Ventilkörpers und Behälterwand den Haltevorsprung in dichtende Anlage mit einer Behälterinnenwand zu bringen, aufgebracht werden. Die Griffvorrichtung ist vorzugsweise ösenförmig gestaltet, um eine komfortable Handhabung zu ermöglichen.

Ein erfindungsgemäßer Ventilkörper weist einen Ventilkanal auf, der von der Flüssigkeit durchströmbar ist, einen Haltevorsprung, der eine Behälterwand des Behälters hintergreift und zur Befestigung des Ventilkörpers an einem Behälter dient, sowie einen Klemmvorsprung. Der Ventilkörper kann dabei so im Behälter angeordnet werden, dass der Haltevorsprung im Inneren des Behälters liegt und eine Fläche des Haltevorsprungs mit einer Innenfläche des Behälters in Anlage kommt. Der Ventilkörper wird ferner mit dem Steckhalter so verbunden, dass der Klemmvorsprung bzw. die Klemmvorsprünge des Ventilkörpers derart mit der oder den Keilflächen des Steckhalters zusammenwirken, dass zwischen Steckhalter und Behälteraußenwand sowie Keilfläche des Steckhalters und Klemmvorsprüngen des Ventilkörpers Kräfte entstehen, die so gerichtet sind, dass der Haltevorsprung des Ventilkörpers gegen eine Innenwand des Behälters vorgespannt wird, so dass der Haltevorsprung in dichtende Anlage an die Innenwand des Behälters kommt. Hierdurch ist es möglich, den Ventilkörper mittels eines einzigen zusätzlichen Bauteils, des Steckhalters, an einem Behälter zu befestigen. Der Steckhalter kann dabei einfach aufgesteckt und abgenommen und der Ventilkörper somit einfach vom Behälter abgenommen werden. Dadurch, dass der Ventilkörper auf der Seite, die beim Gebrauch im Inneren des Behälters liegt, keine Gewindeflächen, Muttern etc. aufweist, wird die Zahl der Hohlräume, Rillen etc, die schwer zu reinigen sind und in denen sich somit Verunreinigungen und Keime bilden können, minimiert.

Nach einer vorteilhaften Weiterbildung der Erfindung ist vorgesehen, den Klemmvorsprung als eine Klemmfläche auszubilden. Die Ebene, in der die Klemmfläche liegt, ist zu einer Ebene, in der der Haltevorsprung liegt, geneigt.

Dies kann beispielsweise dadurch erreicht werden, dass der Ventilkörper an einer Außenfläche eine oder mehrere Nuten aufweist, deren Seitenflächen keilförmig aufeinander zu bzw. voneinander weg laufen. Die beiden einander gegenüberliegenden Seitenflächen einer Nut weisen somit an einem Ende der Nut einen größeren Abstand auf als am anderen Ende der Nut. Dabei kann die Seitenfläche der Nut, die dem Haltevorsprung (und damit gleichzeitig der Behälteraußenwand) nächstgelegen ist, parallel zu der Ebene verlaufen, die durch den Haltevorsprung aufgespannt wird, während die weiter davon entfernte Seitenfläche der Nut relativ zum Haltevorsprung geneigt ist. Des Weiteren muss, um eine Keilwirkung zwischen Keilfläche des Steckhalters, Klemmfläche und Behälteraußenwand zu erzielen, der Abstand zwischen der der Behälteraußenwand nächstliegenden Seitenfläche der Nut und der Behälterinnenwand geringer sein als die Dicke des Behälters an dieser Stelle.

Beim Einstecken eines Schenkels des Steckhalters in die Nut werden durch die keilförmige Gestaltung des Steckhalters und der Nut zwischen dem Schenkel des Steckhalters und der geneigten Seitenfläche (d. h. der Klemmfläche) der Nut Kräfte erzeugt, die einerseits eine zur Behälteraußenwand gerichtete Fläche des Steckhalters gegen die Außenwand des Behälters verspannen, und die andererseits den Ventilkörper in seiner Längsrichtung nach außen vom Behälter wegziehen, so dass der Haltevorsprung des Ventilkörpers, der sich im Inneren des Behälters befindet und dessen Abmessung der Außenkontur größer ist als die Öffnung des Behälters, durch die der Ventilkörper hindurch gesteckt ist, gegen die Behälterinnenwandung vorgespannt wird.

Eine weitere vorteilhafte Ausgestaltung der Erfindung ist im Patentanspruch 9 angegeben. Bei dieser Ausführung weist der Ventilkörper einen Saugrüssel auf. Der Saugrüssel ist auf der Seite des Ventilkörpers angeordnet, die im montierten Zustand im Inneren eines Behälters liegt. Der Saugrüssel dient zum Ansaugen der Flüssigkeit aus dem Behälterinneren. Die Flüssigkeit strömt aus dem Behälterinnenraum zunächst in den Saugrüssel und dann aus diesem heraus in den Ventilkanal des Ventilkörpers. Bei der erfindungsgemäßen Ausführung weist der Saugrüssel eine Längsachse auf, die weitgehend geradlinig verläuft.

Dadurch kann der Saugrüssel einfach gereinigt werden, beispielsweise mittels einer geraden Bürste.

In einer weiteren vorteilhaften Weiterbildung der Erfindung ist die Längsachse des Saugrüssels gegenüber einer Längsachse des Ventilkörpers geneigt. Die Längsachse des Saugrüssels ist dabei gegenüber der Längsachse des Ventilkörpers so geneigt, dass der Saugrüssel in Richtung des Bodens des Behälters weist. Das eine Ende des Saugrüssels, an dem Flüssigkeit aus dem Behälter in den Saugrüssel einströmt, liegt damit unterhalb des anderen Endes des Saugrüssels, das mit dem Ventilkörper verbunden ist und an dem die Flüssigkeit aus dem Saugrüssel heraus in den Ventilkanal des Ventilkörpers einströmt, d. h. näher am Behälterboden. Durch die Neigung des Saugrüssels kann das Ende des Saugrüssels, an dem Flüssigkeit in den Saugrüssel einströmt, in der Nähe des Bodens eines Behälters angeordnet werden. Dadurch ist es möglich, den Behälter bei Verwendung der Ventilanordnung nahezu vollständig zu entleeren.

Nach einer weiteren vorteilhaften Ausführung hat der Ventilkanal an seiner Längsseite eine Öffnung, die so angeordnet ist, dass die verlängerte Längsachse des mit dem Ventilkörper verbundenen Saugrüssels durch die Öffnung an der Längsseite des Ventilkanals verläuft. Ist beispielsweise der Saugrüssel relativ zur Längsachse des Ventilkörpers und des Ventilkanals in Richtung zum Boden des Behälters geneigt, so ist die Öffnung an der Längsseite des Ventilkörpers angeordnet, die nach oben, d. h. vom Behälterboden weg weist. Durch die Öffnung in der Längsseite des Ventilkanals im Ventilkörper hindurch kann ein Reinigungsgerät geradlinig in den Saugrüssel geführt werden. Dadurch ist der Saugrüssel ebenso wie der Ventilkanal des Ventilkörpers einfach zu reinigen, beispielsweise mit einer geraden Reinigungsbürste.

In einer weiteren vorteilhaften Ausführung ist in dem Ventilkanal ein Rückschlagventil angeordnet, mit dem verhindert wird, dass Flüssigkeit aus dem stromabwärts gelegenen Abschnitt des Ventilkanals, aus dem Saugnuckel oder gar aus dem Maul des Viehs in den Behälter zurückfließt. Dadurch werden Verunreinigungen des Behälterinhaltes verhindert. In der erfindungsgemäßen Ausführung besteht das Rückschlagventil aus einem Rückschlagelement, wobei das Rückschlagelement aus biegeelastischem Material ist und in bestimmungsgemäßer Strömungsrichtung, d. h. bei Strömung der Flüssigkeit aus dem Behälter heraus durch Saugrüssel, Ventilkanal und Saugnuckel in das Maul des Viehs hinein, geöffnet ist, bei umgekehrter Strömung jedoch schnell schließt, bevor verunreinigte Flüssigkeit in den Behälter zurückgelangen kann. Das Öffnen und Schließen des Rückschlagelements erfolgt dabei durch elastisches Verbiegen bzw. Verformen derselben.

Das Anschließen einer Viehtränkeventilanordnung an einen Behälter kann durch ein Verfahren mit den Verfahrensschritten des Anspruches 13 durchgeführt werden. Beim Anschließen einer Viehtränkeventilanordnung an einen Behälter wird ein Abschnitt des Saugnuckels auf den Ventilkörper aufgeschoben. Das Aufschieben des Abschnitts des Saugnuckels auf den Ventilkörper kann dabei geschehen, bevor der Ventilkörper am Behälter befestigt wird. Der Abschnitt des Saugnuckels kann aber jedoch auch erst dann auf den Ventilkörper aufgeschoben werden, wenn der Ventilkörper bereits am Behälter befestigt ist.

Zum Befestigen des Ventilkörpers am Behälter wird dieser durch eine Öffnung des Behälters hindurch gesteckt, deren Öffnungsweite kleiner ist als die Abmessung der Außenkontur des Haltevorsprungs des Ventilkörpers. Der Ventilkörper wird dabei vom Inneren des Behälters durchgesteckt, so dass nach dem Durchstecken der Haltevorsprung an der Innenwand des Behälters zum Anliegen kommt. Dadurch ragt ein Abschnitt des Ventilkörpers auf der Behälteraußenseite aus dem Behälter heraus. Nach dem Hindurchstecken wenigstens des Ventilkörpers wird der Steckhalter auf den Abschnitt des Ventilkörpers, der außerhalb des Behälters liegt, aufgesteckt. Beim Aufstecken wirkt mindestens eine Keilfläche des Steckhalters mit mindestens einem Klemmvorsprung des Ventilkörpers so zusammen, dass eine Fläche des Steckhalters gegen einen Abschnitt der Behälteraußenwandung verspannt wird, und weiterhin zwischen Keilfläche des Steckhalters und Klemmvorsprung des Ventilkörpers Kräfte derart vom Steckhalter auf den Ventilkörper ausgeübt werden, dass der Haltevorsprung an der Behälterinnenwand des Behälters zum Anliegen kommt und gegen diese vorgespannt wird.

Nach einer weiteren vorteilhaften Ausgestaltung des Verfahrens zum Anschließen einer Viehtränkeventilanordnung an einen Behälter wird ein Abschnitt des Saugnuckels zunächst auf einen Abschnitt des Ventilkörpers aufgesteckt. Der Steckhalter wird dann auf die Kombination aus Ventilkörper und Saugnuckel aufgesteckt. Der Steckhalter klemmt dann den auf den Abschnitt des Ventilkörpers aufgesteckten Abschnitt des Saugnuckels zwischen sich und dem Ventilkörper ein und befestigt damit den Saugnuckel an dem Ventilkörper. Dadurch sind keine zusätzlichen Befestigungselemente zur Befestigung des Saugnuckels am Ventilkörper erforderlich. Das Aufstecken des Saugnuckels auf den Ventilkörper kann dabei geschehen, bevor der Ventilkörper durch die Öffnung im Behälter hindurch gesteckt wird, so dass bereits die Kombination aus Ventilkörper und Saugnuckel durch die Öffnung im Behälter hindurch gesteckt wird, bevor der Steckhalter aufgesteckt wird. Der Saugnuckel kann alternativ auch erst dann aufgesteckt werden, wenn der Ventilkörper bereits vom Inneren des Behälters aus durch die Öffnung des Behälters hindurch gesteckt wurde.

In einer weiteren vorteilhaften Ausführung des Verfahrens wird vor dem Aufstecken des Steckhalters zunächst der Abschnitt des Saugnuckels soweit auf den Ventilkörper aufgeschoben, dass ein Flansch des Saugnuckels am Haltevorsprung des Ventilkörpers anliegt. Der Flansch des Saugnuckels bildet damit eine Dichtung zwischen Haltevorsprung und Innenwand des Behälters. Nach dem Aufschieben des Saugnuckels auf den Ventilkörper wird die Kombination aus Ventilkörper und Saugnuckel vom Inneren des Behälters aus durch die Öffnung des Behälters hindurch gesteckt. Nach dem Hindurchstecken wird auf der Behälteraußenseite der Steckhalter auf die Kombination aus Saugnuckel und Ventilkörper aufgesteckt. Ein Abschnitt des Saugnuckels kommt dabei zwischen Ventilkörper und Steckhalter zum liegen und wird zwischen Ventilkörper und Steckhalter eingequetscht. Dadurch wird der Saugnuckel an dem Ventilkörper festgehalten.

Das erfindungsgemäße Verfahren zeichnet sich dadurch aus, dass zur Befestigung der Ventilanordnung an einem Behälter nur eine geringe Zahl an Bauteilen erforderlich ist. Der Ventilkörper wird am Behälter vorzugsweise mit dem gleichen Bauteil, dem Steckhalter, befestigt, mit dem auch der Saugnuckel am Ventilkörper befestigt wird. Dadurch kann die Viehtränkeventilanordnung mit wenigen Verfahrensschritten an einem Behälter angeschlossen werden. Sie kann ebenso leicht wieder abgenommen werden, so dass eine Reinigung der Viehtränkeventilanordnung schnell möglich ist.

### c) Ausführungsbeispiel

Eine Ausführungsform gemäß der Erfindung wird im Folgenden beispielhaft anhand der Zeichnungen näher beschrieben. Es zeigen:
- Fig. 1:: eine Ausführungsform der erfindungsgemäßen Viehtränkeventilanordnung im nicht montierten Zustand in Explosionsdarstellung,
- Fig. 2:: die Ausführungsform gemäß Figur 1 in an einem Behälter montiertem Zustand,
- Fig. 3:: Schnitt A-A aus Fig. 2 durch Ventilanordnung und Behälter,
- Fig. 4:: eine Ausführungsform des erfindungsgemäßen, in der Viehtränkeventilanordnung aus Fig. 1 verwendeten Ventilkörpers in Seitenansicht,
- Fig. 5:: den Ventilkörper aus Fig. 4 in perspektivischer Ansicht.

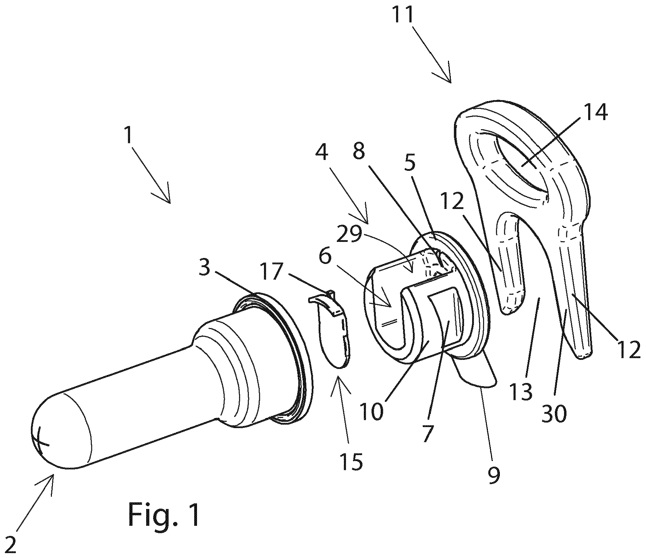

Figur 1 zeigt eine Ausführungsform der Viehtränkeventilanordnung 1, bei der der Saugnuckel 2 einen Flansch 3 aufweist, der in montiertem Zustand am Haltevorsprung 5 des Ventilkörpers 4 anliegt. Der Flansch 3 des Saugnuckels 2 dient dabei als Dichtung zwischen dem Haltevorsprung 5 des Ventilkörpers 4 und der Behälterinnenwand 16. Darüber hinaus weist die in Figur 1 dargestellte Ausführung der Viehtränkeventilanordnung 1 ein als Rückschlagelement 15 ausgebildetes Rückschlagventil auf, das im Ventilkanal 6 des Ventilkörpers 4 angeordnet ist. Das Rückschlagelement 15 weist dabei an seiner Oberseite einen Vorsprung 17 auf, der zur Befestigung in eine Aufnahme 8 des Ventilkörpers 4 eingesteckt wird, so dass das Rückschlagelement 15 zu Reinigungszwecken leicht vom Ventilkörper 4 abgenommen werden kann.

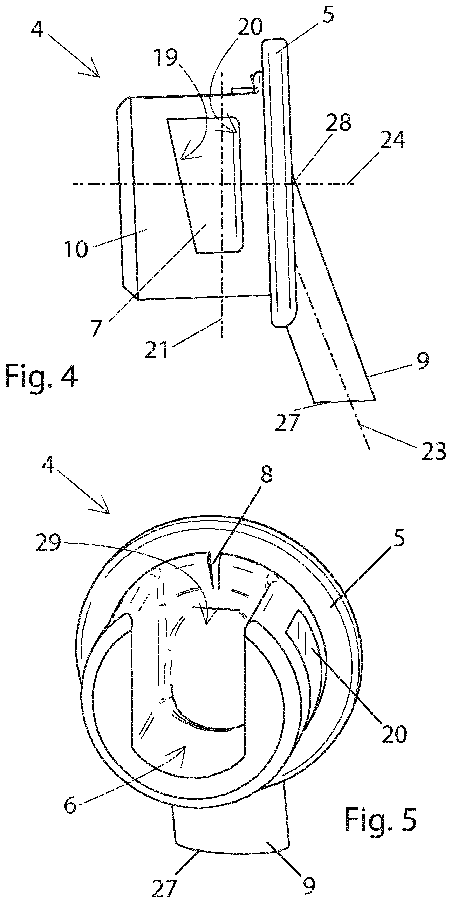

Der Saugnuckel 2 ist an seinem im Gebrauch dem Viehmaul zugewandten Ende eingeschlitzt, so dass Flüssigkeit aus dem Saugnuckel 2 angesaugt werden kann. Auf der dem Behälter 18 zugewandten Seite ist der Saugnuckel 2 mit einem größeren Durchmesser versehen. Der Abschnitt größeren Durchmessers des Saugnuckels 2 umhüllt in montiertem Zustand einen Abschnitt des Ventilkörpers 4. Insbesondere umhüllt dieser Abschnitt in montiertem Zustand Nuten 7 an der Außenwandung 10 des Ventilkörpers 4, deren jeweils eine Seitenfläche 19 (s. Fig. 4) die Klemmvorsprünge des Ventilkörpers 2 bilden.

Die in Figur 1 dargestellte Ausführung des Ventilkörpers 4 weist zwei Nuten 7 auf, deren je eine Seitenfläche 19 einen Klemmvorsprung bildet. Die Nuten 7 verlaufen dabei in Richtung einer Querachse 21 des Ventilkörpers 2. Die Nuten 7 weisen zwei Seitenflächen 19, 20 auf, von denen bei der gezeigten Ausführungsform die in montiertem Zustand der Behälteraußenwand 22 nächstliegende Seitenfläche 20 in einer Ebene verläuft, die parallel zu der Ebene ist, die durch den Haltevorsprung 5 des Ventilkörpers 4 aufgespannt wird. Die dem Haltevorsprung 5 und damit der Behälteraußenwand 22 entfernter liegende Seitenfläche 19 der Nut 7 verläuft dagegen in einer Ebene, die relativ zu der Ebene, die durch den Haltevorsprung 5 aufgespannt wird, geneigt ist.

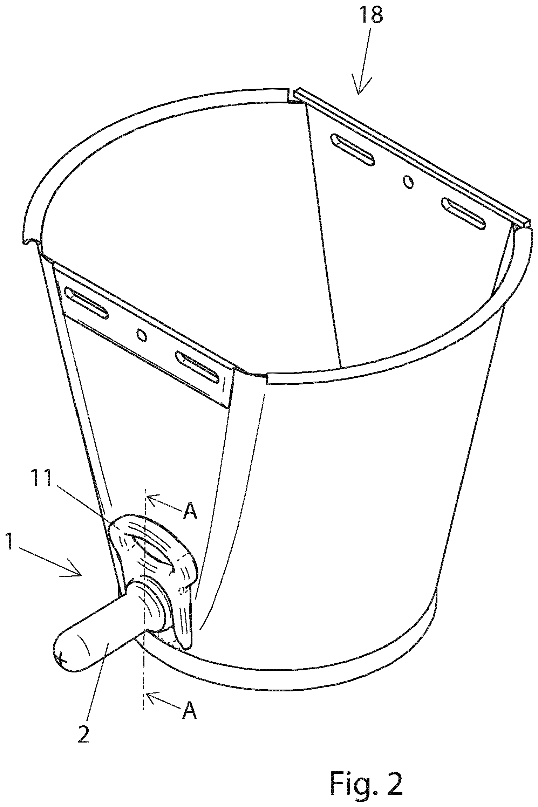

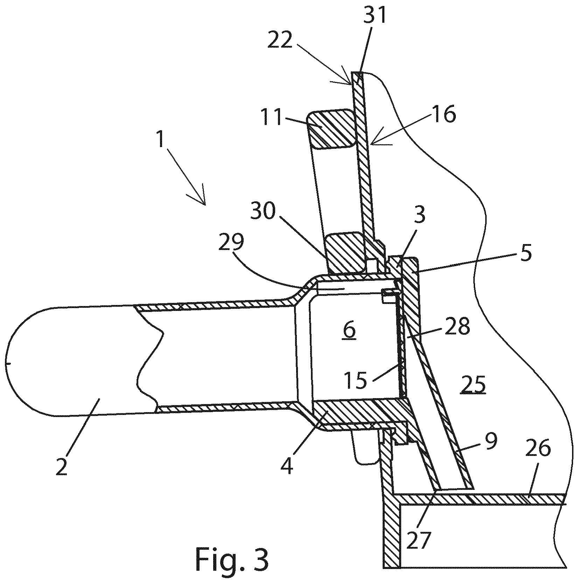

In dem in Fig. 2 und in Fig. 3 dargestellten montiertem Zustand der Ventiltränkeanordnung 1 wird der Steckhalter 11 in dem beschriebenen Ausführungsbeispiel von oben mit seinen beiden Schenkeln 12 in die Nuten 7 des Ventilkörpers 4 gesteckt. Auch die beiden Schenkel 12 des in Figur 1 dargestellten Steckhalters 4 sind keilförmig ausgebildet, d. h. ihre Dicke ist am unteren Ende geringer als am oberen, einem Griff 14 benachbarten Ende der Schenkel 12.

Beim Einstecken des Steckhalters 11 in die Nuten 7 des Ventilkörpers 4 werden durch Zusammenwirken der keilförmigen Schenkel 12 und der geneigten, die Klemmvorsprünge bildenden Seitenflächen 19 der Nuten 7 Kräfte vom Steckhalter 11 auf den Ventilkörper 4 ausgeübt, die den Ventilkörper 4 in einer Richtung, die vom Behälter 18 nach außen weg gerichtet ist, ziehen. Dadurch wird der im Inneren des Behälters 18 an der Behälterinnenwand 16 anliegende Haltevorsprung 5 des Ventilkörpers 4 gegen die Behälterinnenwand 16 vorgespannt.

In der hier dargestellten Ausführung sind sowohl die Schenkel 12 des Steckhalters 11 keilförmig als auch die Seitenwände 19 der Nuten 7 geneigt. Die Seitenwände 19 der Nuten bilden dann Klemmflächen, d. h. es entsteht ein flächiger Kontakt zwischen diesen und den Keilflächen 30 der Schenkel 12 des Steckhalters 11. Es sind jedoch auch Ausführungen denkbar, in denen lediglich die Schenkel 12 des Steckhalters 11 keilförmig, die Seitenwände 19 der Nuten 7 dagegen nicht geneigt sind. Dann entsteht zwischen den Seitenflächen 19 der Nuten 7 und den Keilflächen 30 der Schenkel 12 des Steckhalters 11 ein linienförmiger (Klemm-)Kontakt. Alternativ können auch die Schenkel 12 des Steckhalters 11 nicht keilförmig, die Seitenwände 19 der Nuten 7 dagegen geneigt ausgeführt werden. Auch dann entsteht zwischen den geneigten Seitenflächen 19 der Nuten 7 und den (dann nicht keilförmigen) Flächen 30 der Schenkel 12 des Steckhalters 11 ein linienförmiger (Klemm-)Kontakt.

Bei der hier beispielhaft beschriebenen erfindungsgemäßen Ausführung wird, wie insbesondere in der Schnittdarstellung in Fig. 3 erkennbar, gleichzeitig beim Aufstecken des Steckhalters 11 der Saugnuckel 2 mit einem insbesondere in den Figuren 1 und 3 erkennbaren verdickten Ende, das in montiertem Zustand die Nuten 7 des Ventilkörpers 4 überdeckt, auf dem Ventilkörper 4 festgeklemmt. Der in Figuren 1 und 3 dargestellte Abschnitt größeren Durchmessers des Saugnuckels 1 liegt somit in montiertem Zustand zwischen der Außenwandung 10 und den Nuten 7 des Ventilkörpers 4 sowie der Innenfläche der Schenkel 12 des Steckhalters 11. Das verdickte Ende des Saugnuckels 2 wird damit abschnittsweise durch die Schenkel 12 des Steckhalters 11 in den Nuten 7 des Ventilkörpers 4 eingeklemmt und damit der Saugnuckel 2 formschlüssig mit dem Ventilkörper 4 verbunden. Daneben besteht auch eine kraftschlüssige Verbindung zwischen dem verdickten Abschnitt des Saugnuckels 2 und der Außenwand 10 des Ventilkörpers, wenn der Innendurchmesser des verdickten Abschnitts des Saugnuckels 2 einen geringeren Durchmesser als der Außendurchmesser des Ventilkörpers 4 an seiner Außenwand 10 aufweist und der verdickte Abschnitt des Saugnuckels 2 bzw. der gesamte Saugnuckel 2 aus elastischem Material, z.B. Gummi, besteht.

Der in Figur 1 dargestellte Steckhalter 11 weist zwei Schenkel 12 auf, die einen Zwischenraum 13 einschließen, in dem in montiertem Zustand der Ventilkörper 4 und ein Abschnitt des Saugnuckels 2 liegen. Darüber hinaus weist der Steckhalter 11 einen hier ösenförmig ausgebildeten Griff 14 auf.

Die in den Figuren 4 und 5 dargestellte, in der hier beispielhaft beschriebenen erfindungsgemäßen Ventilanordnung 1 eingesetzte Ausführung des Ventilkörpers 4 hat, in montiertem Zustand im Behälterinnenraum 25 liegend, einen Saugrüssel 9, dessen Längsachse 23 zu der Längsachse 24 des Ventilkörpers 4 geneigt ist, vgl. Fig. 4. Die Längsachse 23 des Saugrüssels 9 ist dabei so geneigt, dass das untere Ende 27 des Saugrüssels 9 in Richtung des Behälterbodens 26 weist. Das entgegengesetzte Ende 28 des Saugrüssels 9 ist dagegen in der hier beschriebenen Ausführung des Ventilkörpers 4 einstückig mit dem Ventilkörper 4 verbunden und geht unmittelbar in den Ventilkanal 6 über.

Der Ventilkanal 6 weist in der hier beschriebenen Ausführung des Ventilkörpers 4 eine seitliche Aussparung 29 auf, die in der in Figur 1 dargestellten Ausführung nach oben, das heißt im montierten Zustand vom Behälterboden 26 weg gerichtet ist. Dadurch ist es möglich, durch die Aussparung 29 des Ventilkanals 6 eine Reinigungsbürste in den Saugrüssel 10 hineinzuführen.

Figuren 2 und 3 zeigen die in Figur 1 dargestellte Ausführung einer Viehtränkeventilanordnung 1 im an einem Behälter 18 montierten Zustand. Dazu ist zunächst der Saugnuckel 2 auf den Ventilkörper 4 aufzustecken, bis der Flansch 3 des Saugnuckels 2 am Haltevorsprung 5 des Ventilkörpers 4 anliegt. Das Rückschlagelement 15 ist dabei bereits vorher im Ventilkörper 4 zu montieren, indem ein Vorsprung 17 des Rückschlagelements 15 in eine Aufnahme 8 am Ventilkörper 4 eingesteckt wird. Nach der Montage des Saugnuckels 2 an dem Ventilkörper 4 wird die Kombination aus Saugnuckel 2 und Ventilkörper 4 von innen durch eine Öffnung in der Wand 31 des Behälters 18 hindurch gesteckt. Auf der Behälteraußenseite 22 wird dann der Steckhalter 11 mit seinen beiden Schenkeln 12 so auf die Kombination aus Saugnuckel 2 und Ventilkörper 4 aufgesteckt, dass der Ventilkörper 4 sowie der Abschnitt vergrößerten Durchmessers des Saugnuckels 2 im Zwischenraum 13 zwischen den beiden Schenkeln 12 des Steckhalters 11 liegt und die beiden Schenkel 12 mit ihrer Innenfläche in die beiden Nuten 7 des Ventilkörpers 2 eingreifen.

Die beiden Schenkel 12 üben dabei über ihre Keilflächen 30 Kräfte auf die geneigten Seitenflächen 19 (d. h. die Klemmflächen) der Nuten 7 aus, wodurch der Ventilkörper 4 gegen die Behälterwand 31 verspannt wird, so dass der Haltevorsprung 5 mit Vorspannung an der Behälterinnenwand 16 anliegt. Zwischen der Behälterinnenwand 16 und dem Haltevorsprung 5 des Ventilkörpers 4 liegt, wie insbesondere in Fig. 3 erkennbar, dabei der Flansch 3 des hier aus Gummi bestehenden Saugnuckels 2. Der Flansch 3 dichtet damit den Haltevorsprung 5 gegenüber der Behälterinnenwand 16 ab, so dass hier keine Flüssigkeit durch die Öffnung in der Wand 31 des Behälters 18 hindurch am Ventilkörper 4 außen vorbei austreten kann.

Im montierten Zustand sind bei der hier beschriebenen Ausführung von außen, wie in Figur 2 dargestellt, nur der Saugnuckel 2 sowie der Steckhalter 11 sichtbar. Durch Abziehen des Steckhalters 11 mittels des ösenförmigen Griffs 14 kann die Kombination aus Saugnuckel 2 und Ventilkörper 4 wieder einfach vom Behälter 18 abgenommen werden. In vom Behälter 18 entfernten Zustand wird dann der Saugnuckel 2 vom Ventilkörper 4 abgenommen und das Rückschlagelement 15 aus dem Ventilkörper 4 entfernt. Dann können sämtliche Einzelteile gereinigt werden.

### BEZUGSZEICHENLISTE

- 1: Viehtränkeventilanordnung
- 2: Saugnuckel
- 3: Flansch
- 4: Ventilkörper
- 5: Haltevorsprung
- 6: Ventilkanal
- 7: Nut
- 8: Aufnahme
- 9: Saugrüssel
- 10: Außenwandung des Ventilkörpers
- 11: Steckhalter
- 12: Schenkel
- 13: Zwischenraum
- 14: Griffvorrichtung
- 15: Rückschlagelement
- 16: Behälterinnenwand
- 17: Vorsprung
- 18: Behälter
- 19: Seitenfläche, Klemmvorsprung
- 20: Seitenfläche
- 21: Querachse des Ventilkörpers
- 22: Behälteraußenwand
- 23: Längsachse des Saugrüssels
- 24: Längsachse des Ventilkörpers
- 25: Behälterinnenraum
- 26: Behälterboden
- 27: unteres Ende des Saugrüssels
- 28: ventilkörpernahes Ende des Saugrüssels
- 29: Aussparung des Ventilkanals
- 30: Keilfläche
- 31: Behälterwand

## Patentansprüche

1. Viehtränkeventilanordnung (1) zum Anschließen an einen Behälter (18), umfassend
• einen Saugnuckel (2), mit dessen Hilfe in dem Behälter (18) befindliche Flüssigkeit von dem Vieh ansaugbar ist, und
• einen Ventilkörper (4), der an dem Saugnuckel (2) befestigbar ist und einen von der Flüssigkeit durchströmbaren Ventilkanal (6) aufweist,
wobei
• der Ventilkörper (4) einen Haltevorsprung (5) zum Hintergreifen einer Behälterwand (31) des Behälters (18) und wenigstens einen Klemmvorsprung (19) aufweist, und
• die Viehtränkeventilanordnung (1) des Weiteren einen Steckhalter (11) mit wenigstens einer Keilfläche (30) umfasst,
und wobei zum Anschließen der Viehtränkeventilanordnung (1) an den Behälter (18)
• einerseits der Ventilkörper (4) derart anordenbar ist, dass der Haltevorsprung (5) im Inneren (25) des Behälters (18) liegt, und
• andererseits der Steckhalter (11) derart außerhalb des Behälters (18) an den Ventilkörper (4) ansteckbar ist, dass sich der Steckhalter (11) an einer Behälteraußenwand (22) des Behälters (18) abstützt und die wenigstens eine Keilfläche (30) derart mit dem wenigstens einen Klemmvorsprung (19) zusammen wirkt, dass der Haltevorsprung (5) des Ventilkörpers (4) gegen eine Behälterinnenwand (16) des Behälters (18) vorgespannt wird.

2. Viehtränkeventilanordnung (1) nach Anspruch 1,
**dadurch gekennzeichnet, dass**
der Saugnuckel (2) zumindest abschnittsweise den Ventilkörper (4) umhüllt und mit Hilfe des Steckhalters (11) an dem Ventilkörper (4) befestigbar ist.

3. Viehtränkeventilanordnung (1) nach einem der vorangehenden Ansprüche,
**dadurch gekennzeichnet, dass**
der Saugnuckel (2) einen Flansch (3) aufweist, der zwischen der Behälterinnenwand (16) und dem Haltevorsprung (5) anordenbar ist und als Dichtungsring fungiert.

4. Steckhalter (11) zum Befestigen eines Viehtränkeventils an einem Behälter (18), wobei das Viehtränkeventil einen Saugnuckel (2), mit dessen Hilfe in dem Behälter (18) befindliche Flüssigkeit von dem Vieh ansaugbar ist, und einen Ventilkörper (4), der an dem Saugnuckel (2) befestigbar ist, einen von der Flüssigkeit durchströmbaren Ventilkanal (6), einen Haltevorsprung (5) zum Hintergreifen einer Behälterwand (31) des Behälters (18) und wenigstens einen Klemmvorsprung (19) aufweist, umfasst,
wobei der Steckhalter (11) wenigstens eine Keilfläche (30) aufweist und zum Befestigen des Viehtränkeventils an dem Behälter (18) derart außerhalb des Behälters (18) an den Ventilkörper (4) ansteckbar ist, dass sich der Steckhalter (11) an einer Behälteraußenwand (22) des Behälters (18) abstützt und die wenigstens eine Keilfläche (30) derart mit dem wenigstens einen Klemmvorsprung (19) zusammen wirkt, dass der Haltevorsprung (5) des Ventilkörpers (4) gegen eine Behälterinnenwand (16) des Behälters (18) vorgespannt wird.

5. Viehtränkeventilanordnung (1) nach einem der Ansprüche 1 bis 3 oder Steckhalter (11) nach Anspruch 4,
**dadurch gekennzeichnet, dass**
der Steckhalter (11) zwei voneinander beabstandete Schenkel (12) mit jeweils wenigstens einer Keilfläche (30) aufweist und die Schenkel (12) einen Zwischenraum (13) bilden, innerhalb dessen ein Abschnitt des Ventilkörpers (4) anordenbar ist.

6. Viehtränkeventilanordnung (1) nach einem der Ansprüche 1 bis 3 oder 5 oder Steckhalter (11) nach einem der Ansprüche 4 bis 5,
**dadurch gekennzeichnet, dass**
der Steckhalter (11) eine Griffvorrichtung (14) aufweist.

7. Ventilkörper (4) zum Gebrauch in einer Viehtränkeventilanordnung (1), die an einen Behälter (18) anschließbar ist und den Ventilkörper (4), einen Saugnuckel (2), mit dessen Hilfe in dem Behälter (18) befindliche Flüssigkeit von dem Vieh ansaugbar ist, sowie einen Steckhalter (11) mit wenigstens einer Keilfläche (30) umfasst,
wobei der Ventilkörper (4) einen von der Flüssigkeit durchströmbaren Ventilkanal (6), einen Haltevorsprung (5) zum Hintergreifen einer Behälterwand (31) des Behälters (18) und wenigstens einen Klemmvorsprung (19) aufweist, und wobei der Ventilkörper (4) zum Anschließen der Viehtränkeventilanordnung (1) an den Behälter (18) einerseits derart anordenbar ist, dass der Haltevorsprung (5) im Inneren (25) des Behälters (18) liegt, und andererseits derart mit dem Steckhalter (11) verbindbar ist, dass der wenigstens eine Klemmvorsprung (19) derart mit der wenigstens einen Keilfläche (30) zusammen wirkt, dass der Haltevorsprung (5) des Ventilkörpers (4) gegen eine Behälterinnenwand (16) des Behälters (18) vorgespannt wird.

8. Viehtränkeventilanordnung (1) nach einem der Ansprüche 1 bis 3 oder 5 bis 6 oder Ventilkörper (4) nach Anspruch 7,
**dadurch gekennzeichnet, dass**
der Klemmvorsprung (19) als Klemmfläche ausgebildet ist, die zu einer von dem Haltevorsprung (5) aufgespannten Ebene geneigt verläuft.

9. Viehtränkeventilanordnung (1) nach einem der Ansprüche 1 bis 3 oder 5 bis 6 oder 8 oder Ventilkörper (4) nach einem der Ansprüche 7 bis 8,
**dadurch gekennzeichnet, dass**
der Ventilkörper (4) einen Saugrüssel (9) zum Ansaugen der Flüssigkeit umfasst, wobei der Saugrüssel (9) eine Längsachse (23) aufweist, die im Wesentlichen geradlinig verläuft.

10. Viehtränkeventilanordnung (1) nach Anspruch 9,
**dadurch gekennzeichnet, dass**
die Längsachse (23) des Saugrüssels (9) gegenüber einer Längsachse (24) des Ventilkörpers (4) derart geneigt verläuft, dass der Saugrüssel (9) in Richtung des Bodens (26) des Behälters (18) weisend anordenbar ist.

11. Viehtränkeventilanordnung (1) nach Anspruch 9 oder 10,
**dadurch gekennzeichnet, dass**
der Saugrüssels (9) in den Ventilkanals (6) mündet und der Ventilkanal (6) entlang einer Längsseite eine Aussparung (29) derart aufweist, dass die Verlängerung der Längsachse (23) des Saugrüssels (9) durch die Aussparung (29) des Ventilkanals (6) verläuft und somit zum Reinigen des Saugrüssels (9) ein Reinigungsgerät geradlinig durch die Aussparung (29) des Ventilkanals (6) hindurch in den Saugrüssel (9) geführt werden kann.

12. Viehtränkeventilanordnung (1) nach einem der Ansprüche 1 bis 3 oder 5 bis 6 oder 8 bis 11 oder Ventilkörper (4) nach einem der Ansprüche 7 bis 11,
**dadurch gekennzeichnet, dass**
in dem Ventilkanal (6) ein Rückschlagelement (15) angeordnet ist, wobei das Rückschlagelement (15) aus biegeelastischem Material besteht und dadurch die Rückschlagfunktionalität gewährleistet.

13. Verfahren zum Anschließen einer Viehtränkeventilanordnung (1) an einen Behälter (18), wobei die Viehtränkeventilanordnung (18) umfasst:
• einen Saugnuckel (2), mit dessen Hilfe in dem Behälter (18) befindliche Flüssigkeit von dem Vieh ansaugbar ist,
• einen Ventilkörper (4), der an dem Saugnuckel (2) befestigbar ist und einen Haltevorsprung (5) zum Hintergreifen einer Behälterwand (31) des Behälters (18) und wenigstens einen Klemmvorsprung (19) aufweist, und
• einen Steckhalter (11) mit wenigstens einer Keilfläche (30),
mit den folgenden Verfahrensschritten:
• Aufschieben eines Abschnitts des Saugnuckels (2) auf den Ventilkörper (4),
• Hindurchstecken wenigstens des Ventilkörpers (4) durch eine Öffnung des Behälters (18) vom Inneren (25) des Behälters (18) aus, so dass der Haltevorsprung (5) im Inneren (25) des Behälters (18) liegt,
• Aufstecken des Steckhalters (11) auf den Ventilkörper (4) außerhalb des Behälters (18), so dass die wenigstens eine Keilfläche (30) des Steckhalters (11) mit dem Klemmvorsprung (19) des Ventilkörpers (4) derart zusammenwirkt und sich der Steckhalter (11) an einer Behälteraußenwand (22) des Behälters (18) derart abstützt, dass der Haltevorsprung (5) des Ventilkörpers (4) gegen eine Behälterinnenwand (16) des Behälters (18) vorgespannt wird.

14. Verfahren nach Anspruch 13, wobei der Steckhalter (11) auf die Kombination aus Ventilkörper (4) und Saugnuckel (2) derart aufgesteckt wird, dass der Steckhalter (11) einen Abschnitt des Saugnuckels (2) zwischen sich und dem Ventilkörper (4) einklemmt.

15. Verfahren nach Anspruch 14, wobei vor dem Aufstecken des Steckhalters (11) auf die Kombination aus Saugnuckel (2) und Ventilkörper (4) der Abschnitt des Saugnuckels (2) so weit auf den Ventilkörper (4) aufgeschoben wird, dass ein Flansch des Saugnuckels (2) am Haltevorsprung (5) des Ventilkörpers (4) zum Anliegen kommt.

## Claims

1. Livestock nipple valve assembly (1) for connecting to a container (18), comprising
• a teat (2), by means of which liquid located in the container (18) can be sucked by the animal, and
• a valve body (4), which can be fastened to the teat (2) and a valve channel (6) through which the liquid can flow
wherein
• the valve body (4) has a retaining projection (5) for engaging behind a container wall (31) of the container (18) and at least one clamping edge (19), and
• the livestock nipple valve assembly (1) further comprises a plug holder (11) with at least one tapered face (30),
and wherein, in order for connecting the livestock nipple valve assembly (1) to the container (18)
• on the one hand, the valve body (4) can be arranged such that the retaining projection (5) is located on the inside (25) of the container (18), and
• on the other hand, the plug holder (11) can be inserted into the valve body (4) outside the container (18) such that the plug holder (11) is supported on an outer container wall (22) of the container (18) and the at least one tapered face (30) interacts with the at least one clamping edge (19) such that the retaining projection (5) of the valve body (4) is tightened against a container inner wall (16) of the container (18).

2. Livestock nipple valve assembly (1) according to claim 1,
**characterised in that**
the teat (2) at least partially envelopes the valve body (4) and can be attached to the valve body (4) by means of the plug holder (11).

3. Livestock nipple valve assembly (1) according to any one of the preceding claims,
**characterised in that**
the teat (2) has a flange (3) which can be arranged between the container inner wall (16) and the retaining projection (5) and functions as a sealing ring.

4. Plug holder (11) for fastening a livestock nipple valve to a container (18), wherein the livestock nipple valve comprises a teat (2), by means of which liquid located in the container (18) can be sucked by the animal, and a valve body (4), which can be fastened to the teat (2), a valve channel (6) through which the liquid can flow, a retaining projection (5) for engaging behind a container wall (31) of the container (18) and has at least one clamping edge (19),
wherein the plug holder (11) has at least one tapered face (30) and, in order to fasten the livestock nipple valve to the container (18), can be inserted into the valve body (4) outside the container (18) such that the plug holder (11) is supported on an outer container wall (22) of the container (18) and the at least one tapered face (30) interacts with the at least one clamping edge (19) such that the retaining projection (5) of the valve body (4) is tightened against a container inner wall (16) of the container (18).

5. Livestock nipple valve assembly (1) according to any one of the claims 1 to 3 or plug holder (11) according to claim 4,
**characterised in that**
the plug holder (11) has two legs (12) spaced apart from each other, each having at least one tapered face (30) and the legs (12) form an intermediate space (13), inside which a section of the valve body (4) can be arranged.

6. Livestock nipple valve assembly (1) according to any one of the claims 1 to 3 or 5 or plug holder (11) according to any one of the claims 4 to 5,
**characterised in that**
the plug holder (11) has a gripping provision (14).

7. Valve body (4) for use in a livestock nipple valve assembly (1) which can be connected to a container (18) and comprises the valve body (4), a teat (2), by means of which liquid located in the container (18) can be sucked by the animal, and a plug holder (11) with at least one tapered face (30),
wherein the valve body (4) has a valve channel (6) through which the liquid can flow, a retaining projection (5) to engage behind a container wall (31) of the container (18) and at least one clamping edge (19), and wherein, in order to connect the livestock nipple valve assembly (1) to the container (18), the valve body (4) can be arranged, on the one hand, such that the retaining projection (5) rests on the inside (25) of the container (18), and, on the other hand, can be attached to the plug holder (11) such that the at least one clamping edge (19) interacts with the at least one tapered face (30) such that the retaining projection (5) of the valve body (4) is tightened against a container inner wall (16) of the container (18).

8. Livestock nipple valve assembly (1) according to any one of the claims 1 to 3 or 5 to 6 or valve body (4) according to claim 7,
**characterised in that**
the clamping edge (19) is formed as a clamping face which is inclined in relation to a plane extending out from the retaining projection (5).

9. Livestock nipple valve assembly (1) according to any one of the claims 1 to 3 or 5 to 6 or 8 or valve body (4) according to any one of the claims 7 to 8,
**characterised in that**
the valve body (4) comprises a suction nozzle (9) for sucking the liquid, wherein the suction nozzle (9) has a longitudinal axis (23) running substantially in a straight line.

10. Livestock nipple valve assembly (1) according to claim 9,
**characterised in that**
the longitudinal axis (23) of the suction nozzle (9) runs essentially at an angle in relation to a longitudinal axis (24) of the valve body (4) such that the suction nozzle (9) can be arranged pointing towards the base (26) of the container (18).

11. Livestock nipple valve assembly (1) according to claim 9 or 10,
**characterised in that**
the suction nozzle (9) leads into the valve channel (6) and the valve channel (6) has a recess (29) along a longitudinal side such that the extension of the longitudinal axis (23) of the suction nozzle (9) runs through the recess (29) of the valve channel (6) and, as a result, a cleaning device can be fed in a straight line through the recess (29) of the valve channel (6) into the suction nozzle (9) in order to clean the suction nozzle (9).

12. Livestock nipple valve assembly (1) according to any one of the claims 1 to 3 or 5 to 6 or 8 to 11 or valve body (4) according to any one of the claims 7 to 11,
**characterised in that**,
in the valve channel (6), a check element (15) is arranged wherein the check element (15) consists of a flexibly elastic material and thereby ensures the functionality of said check element.

13. Method for connecting a livestock nipple valve assembly (1) in a container (18), wherein the livestock nipple valve assembly (18) comprises:
• a teat (2), by means of which liquid located in the container (18) can be sucked by the animal,
• a valve body (4), which can be fastened to the teat (2) and a retaining projection (5) for engaging behind a container wall (31) of the container (18) and has at least one clamping edge (19), and
• a plug holder (11) with at least one tapered face (30), with the following method steps:
• sliding a part of the teat (2) on to the valve body (4),
• inserting at least the valve body (4) through an opening of the container (18) from the inside (25) of the container (18) outwards so that the retaining projection (5) rests against the inside (25) of the container (18),
• inserting the plug holder (11) on to the valve body (4) outside the container (18), so that the at least one tapered face (30) of the plug holder (11) interacts with the clamping edge (19) of the valve body (4) and the plug holder (11) is supported on a container outer wall (22) of the container (18) such that the retaining projection (5) of the valve body (4) is tightened against a container inner wall (16) of the container (18).

14. Method according to claim 13, wherein the plug holder (11) is inserted onto the combination of valve body (4) and teat (2) such that the plug holder (11) clamps a section of the teat (2) between itself and the valve body (4).

15. Method according to claim 14, wherein, before inserting the plug holder (11) on to the combination of teat (2) and valve body (4), the section of the teat (2) is slid so far on to the valve body (4) that a flange of the teat (2) rests on the retaining projection (5) of the valve body (4).

## Revendications

1. Agencement de vanne d'abreuvoir (1), destiné à être raccordé à un récipient (18), comprenant
• une tétine (2), à l'aide de laquelle le liquide contenu dans le récipient (18) peut être aspiré par le bétail, et
• un corps de vanne (4), qui peut être fixé sur la tétine (2) et présente un canal de vanne (6), que le liquide (6) peut traverser,
• le corps de vanne (4) présentant un relief de maintien (5), destiné à s'engager derrière une paroi (31) du récipient (18), et au moins un relief de serrage (19), et
• l'agencement de vanne d'abreuvoir (1) comprenant, en plus, une fiche de fixation (11) avec au moins une surface cunéiforme (30),
et, pour le raccordement de l'agencement de vanne d'abreuvoir (1) au récipient (18),
• le corps de vanne (4) peut être disposé de façon que le relief de maintien (5) se situe à l'intérieur du récipient (18), d'une part, et
• la fiche de fixation (11) peut être attachée au corps de vanne (4) à l'extérieur du récipient (18), de façon qu'elle s'appuie sur une paroi externe (22) de celui-ci et que l'au moins une surface cunéiforme (30) coopère avec l'au moins un relief de serrage (19), de sorte que le relief de maintien (5) du corps de vanne (4) soit précontraint contre une paroi interne (16) du récipient (18), d'autre part.

2. Agencement de vanne d'abreuvoir (1) suivant la revendication 1,
**caractérisé en ce que**
la tétine (2) entoure le corps de vanne (4) au moins par sections et peut être fixée au corps de vanne (4) à l'aide de la fiche de fixation (11).

3. Agencement de vanne d'abreuvoir (1) suivant une des revendications précédentes,
**caractérisé en ce que**
la tétine (2) présente une bride (3) pouvant être disposée entre la paroi interne (16) du récipient (18) et le relief de maintien (5) et remplissant une fonction de bague d'étanchéité.

4. Fiche de fixation (11) destinée à la fixation d'une vanne d'abreuvoir de bétail à un récipient (18), la vanne d'abreuvoir comprenant une tétine (2), à l'aide de laquelle le liquide contenu dans le récipient (18) peut être aspiré par le bétail, et un corps de vanne (4), qui peut être fixé à la tétine (2), un canal de vanne (6) que le liquide peut traverser, un relief de maintien (5), destiné à s'engager derrière une paroi (31) du récipient (18), et au moins un relief de serrage (19),
la fiche de fixation (11) présentant au moins une surface cunéiforme (30) et pouvant être attachée au corps de vanne (4) pour la fixation de la vanne d'abreuvoir de bétail au récipient (18), de façon que la fiche de fixation (11) s'appuie sur une paroi externe (22) du récipient (18) et que l'au moins une surface cunéiforme (30) coopère avec l'au moins un relief de serrage (19), de façon que le relief de maintien (5) du corps de vanne (4) soit précontraint contre une paroi interne (16) du récipient (18).

5. Agencement de vanne d'abreuvoir (1) suivant une des revendications 1 à 3 ou fiche de fixation (11) suivant la revendication 4,
**caractérisé en ce que**
la fiche de fixation (11) présente deux branches (12), écartées l'une de l'autre, avec respectivement une surface cunéiforme (30) et **en ce que** les branches (12) forment un espace intermédiaire (13), à l'intérieur duquel une section du corps de vanne (4) peut être disposée.

6. Agencement de vanne d'abreuvoir (1) suivant une des revendications 1 à 3 ou 5 ou fiche de fixation (11) suivant une des revendications 4 à 5,
**caractérisé en ce que**
la fiche de fixation (11) présente un système de poignée (14).

7. Corps de vanne (4), destiné à être utilisé dans un agencement de vanne d'abreuvoir (1) pouvant être raccordé à un récipient (18) et comprenant le corps de vanne (4), une tétine (2) à l'aide de laquelle le liquide contenu dans le récipient (18) peut être aspiré par le bétail, ainsi qu'une fiche de fixation (11) avec au moins une surface cunéiforme (30), le corps de vanne (4) présentant un canal de vanne (6), que le liquide peut traverser, un relief de maintien (5), destiné à s'engager derrière une paroi (31) du récipient (18), et au moins un relief de serrage (19), et pour le raccordement de l'agencement de vanne d'abreuvoir de bétail (1) au récipient (18), le corps de vanne (4) peut être disposé, de façon que la saillie de maintien (5) se situe à l'intérieur du récipient (18), d'une part, et attaché à la fiche de fixation (11), de façon que l'au moins un relief de serrage (19) coopère avec l'au moins une surface cunéiforme (30), de sorte que le relief de maintien (5) du corps de vanne (4) soit précontraint contre une paroi interne (16) du récipient (18), d'autre part.

8. Agencement de vanne d'abreuvoir (1) suivant une des revendications 1 à 3 ou 5 à 6 ou 8 ou corps de vanne (4) suivant la revendication 7,
**caractérisé en ce que**
le relief de serrage (19) est conçu comme surface de serrage s'étendant de façon inclinée par rapport à un plan passant par le relief de maintien (5).

9. Agencement de vanne d'abreuvoir (1) suivant une des revendications 1 à 3 ou 5 à 6 ou 8 ou corps de vanne (4) suivant une des revendications 7 à 8,
**caractérisé en ce que**
le corps de vanne (4) comprend une trompe d'aspiration (9) pour aspirer le liquide, la trompe d'aspiration (9) présentant un axe longitudinal essentiellement rectiligne.

10. Agencement de vanne d'abreuvoir (1) suivant la revendication 9,
**caractérisé en ce que**
l'axe longitudinal (23) de la trompe d'aspiration (9) s'étend de façon inclinée par rapport à un axe longitudinal (24) du corps de vanne (4), de sorte que la trompe d'aspiration (9) puisse être disposée de manière orientée vers le fond (26) du récipient.

11. Agencement de vanne d'abreuvoir (1) suivant la revendication 9 ou 10,
**caractérisé en ce que**
la trompe d'aspiration (9) débouche dans le canal de vanne (6) et **en ce que** le canal de vanne (6) présente, le long d'un côté longitudinal, un orifice (29), de façon que le prolongement de l'axe longitudinal (23) de la trompe d'aspiration (9) s'étend à travers l'orifice (29) du canal de vanne (6), ce qui permet, par conséquent, de guider un appareil de nettoyage linéairement à travers l'orifice (29) du canal de vanne (6) dans la trompe d'aspiration (9).

12. Agencement de vanne d'abreuvoir (1) suivant une des revendications 1 à 3 ou 5 à 6 ou 8 à 11 ou corps de vanne (4) suivant une des revendications 7 à 11,
caractérisé en ce qu"
un élément anti-retour (15) est disposé dans le canal de vanne (6), l'élément anti-retour (15) étant en une matière flexible, ce qui garantit, par conséquent, la fonctionnalité anti-retour.

13. Procédé de raccordement d'un agencement de vanne d'abreuvoir (1) à un récipient (18), l'agencement de vanne d'abreuvoir (1) comprenant :
• une tétine (2), à l'aide de laquelle le liquide contenu dans le récipient (18) peut être aspiré par le bétail,
• un corps de vanne (4) pouvant être fixé à la tétine (2) et présentant un relief de maintien (50), destiné à s'engager derrière une paroi (31) du récipient (18), et au moins un relief de serrage (19), et
• une fiche de fixation (11) avec au moins une surface cunéiforme (30),
procédé comprenant les étapes suivantes qui consistent à :
• enfiler une section de la tétine (2) sur le corps de vanne (4),
• faire passer au moins le corps de vanne (4) à travers une ouverture du récipient (18) depuis l'intérieur (25) de celui-ci, de façon que le relief de maintien (5) se situe à l'intérieur (25) du récipient (18),
• emboîter la fiche de fixation (11) sur le corps de vanne (4) à l'extérieur du récipient (18), de façon que l'au moins une surface cunéiforme (30) de la fiche de fixation (11) coopère avec le relief de serrage (19) du corps de vanne (4), et la fiche de fixation (11) s'appuie sur une paroi externe (22) du récipient (18) de façon que le relief de maintien (5) du corps de vanne (4) soit précontraint contre une paroi interne (16) du récipient (18).

14. Procédé suivant la revendication 13, la fiche de fixation (11) étant emboîtée sur la combinaison corps de vanne (4) et tétine (2), de façon qu'elle serre une section de la tétine (2) entre elle et le corps de vanne (4).

15. Procédé suivant la revendication 14, dans lequel, préalablement à l'emboîtement de la fiche de fixation (11) sur la combinaison tétine (2) et corps de vanne (4), la section de la tétine (2) est enfilée sur le corps de vanne (4) à un degré tel, qu'une bride de la tétine (2) vient en contact avec le relief de maintien (5) du corps de vanne (4).
